# EUROPÄISCHE PATENTSCHRIFT

(11) **EP 2 401 166 B1**
(45) Veröffentlichungstag und Bekanntmachung des Hinweises auf die Patenterteilung: **23.10.2013**
(21) Anmeldenummer: 10708514.4
(22) Anmeldetag: 25.02.2010
(51) Int. Cl.: B60G 17/019

(54) **FAHRWERKSENSOR**
CHASSIS SENSOR
CAPTEUR DE TRAIN

(30) Priorität: 25.02.2009 DE 102009010347
(43) Veröffentlichungstag der Anmeldung: 04.01.2012
(73) Patentinhaber: Continental Automotive GmbH, 30165 Hannover (DE)
(72) Erfinder: BERBERICH, Reinhold, 60439 Frankfurt (DE); FILZEK, Björn, 65817 Eppstein (DE); STEIMEL, Christoph, 55124 Mainz (DE)
(86) Internationale Anmeldenummer: PCT/EP2010/052391
(87) Internationale Veröffentlichungsnummer: WO 2010/097429

(56) Entgegenhaltungen:
- EP-A1- 1 886 849
- DE-A1- 10 308 220
- DE-A1- 10 333 997
- DE-A1-102008 040 212

## Beschreibung

Die vorliegende Erfindung betrifft einen Fahrwerksensor eines Kraftfahrzeugs, eine Fahrwerksensoranordnung eines Kraftfahrzeugs, ein Kraftfahrzeug mit einem Fahrwerksensor oder einer Fahrwerksensoranordnung sowie ein Regelungsverfahren eines Kraftfahrzeugs. Ein Fahrwerksensor nach dem Oberbegriff des Anspruchs 1 ist aus DE 103 33 997 A1 bekannt.

Sensoren in Kraftfahrzeugen werden im Allgemeinen als eigenständige Einheiten verwendet. Dies bedeutet, dass die Sensoren jeweils mit eigenen Gehäusen sowie separaten Steckern bzw. Kabelanbindungen eingebaut werden. Beispiele für solche Sensoren sind Beschleunigungs-, Raddrehzahl- oder Höhenstandsensoren.

Eine Erfassung insbesondere von Gier-, Roll- und Nickraten des Kraftfahrzeugs durch zentrale Drehratensensoren scheitert üblicherweise an einer unzureichenden Genauigkeit der erfassten Werte. Gemäß den Sicherheitsbestrebungen sollte allerdings bei einem Ausfall von Einzelsensoren, wie beispielsweise dem zentralen Drehratensensor, eine Redundanz vorhanden sein. Der Einsatz eines zweiten oder weiteren zentralen Drehratensensors steht unter Kostenaspekten allerdings im Widerspruch zu einer möglichst großen Kostenminimierung. Somit entsteht bei der Verwendung eines zentralen Drehratensensors ein Widerspruch aus Kosten und Sicherheitsanforderungen.

Weiterhin wird eine immer größere Anzahl an Aktuatoren in zentralen Steuergeräten des Kraftfahrzeugs verbaut. Dies kann dazu führen, dass sich bei den zentralen Steuergeräten der Nachteil einer unzureichenden Wärmeabfuhr ergibt. Bei den entsprechenden Aktuatoren handelt es sich insbesondere um Dämpferregelventile oder Luftfederventile.

Weiterhin nachteilig ist die Anzahl der für eine Ansteuerung der jeweiligen Ventile durch das Fahrzeug zu führenden Leitungen. Die über diese Leitungen gesendeten Signale sind üblicherweise pulsweitenmoduliert getaktet, was zusätzlich nachteilig im Hinblick auf eine elektromagnetische Verträglichkeit ist.

Eine Aufgabe der vorliegenden Erfindung ist daher die Optimierung eines Fahrwerksensors im Hinblick auf die Genauigkeit der erfassten Werte sowie das Bereitstellen einer entsprechenden Fahrwerksensoranordnung und eines entsprechenden Regelungsverfahrens eines Kraftfahrzeugs.

Die obige Aufgabe wird gelöst durch einen Fahrwerksensor eines Kraftfahrzeugs gemäß Anspruch 1, eine Fahrwerksensoranordnung eines Kraftfahrzeugs gemäß Anspruch 5, ein Kraftfahrzeug mit einem Fahrwerksensor oder einer Fahrwerksensoranordnung gemäß Anspruch 8 sowie ein Regelungsverfahren eines Kraftfahrzeugs gemäß Anspruch 9. Weitere vorteilhafte Ausführungsformen ergeben sich aus der nachfolgenden Beschreibung, den Zeichnungen sowie den abhängigen Ansprüchen.

Ein Fahrwerksensor eines Kraftfahrzeugs umfasst die Merkmale des Anspruchs 1.

Ein Fahrwerksensor weist vorzugsweise ein Gehäuse mit einer Vorrichtung auf, mit der der Fahrwerksensor an einer Komponente einer Radaufhängung des Kraftfahrzeugs befestigbar ist. Die Vorrichtung ist insbesondere eine entsprechend geeignete Montagevorrichtung des Fahrwerksensors. Gemäß einer bevorzugten Ausführungsform ist das Gehäuse in einem Radkasten des Kraftfahrzeugs befestigbar.

Weiterhin ist das Gehäuse beispielsweise besonders robust ausgebildet und/oder die in dem Gehäuse integrierten Bauteile sind besonders robust ausgebildet. Dies gilt insbesondere im Hinblick auf Erschütterungen, Temperaturen unter -40°C und höher als 105°C sowie im Hinblick auf Schmutz.

Bei den in dem Gehäuse integrierten Elementen handelt es sich bevorzugt um eine Energieversorgungseinheit, eine erste Steuereinheit sowie einen dreiachsigen Beschleunigungssensor. Die erste Steuereinheit weist eine Bus-kompatible Schnittstelle auf, mit der der Fahrwerksensor mit einer zweiten Steuereinheit verbindbar ist. Insbesondere nutzen alle in dem Gehäuse integrierten Sensoren die Bus-kompatible Schnittstelle der ersten Steuereinheit, die in dem Gehäuse des Fahrwerksensors integriert ist, um mit einer zweiten Steuereinheit zu kommunizieren. Bei der zweiten Steuereinheit handelt es sich insbesondere um eine elektronische Kontrolleinheit.

Ein Vorteil des erfindungsgemäßen Fahrwerksensors ist insbesondere, dass er dezentral in einem Kraftfahrzeug anordbar ist, insbesondere mit einer radweisen Zuordnung. Weiterhin können durch die erste Steuereinheit die von dem dreiachsigen Beschleunigungssensor erfassten Werte mittels der integrierten ersten Steuereinheit einer ersten Auswertung unterzogen werden. Die so gewonnenen Sensorinformationen können über die Bus-kompatible Schnittstelle der ersten Steuereinheit weiteren Steuergeräten, insbesondere einem zentralen Steuergerät eines Kraftfahrzeugs, zur Verfügung gestellt werden. Bei dem zentralen Steuergerät kann es sich um beispielsweise um eine Steuereinheit eines Kraftfahrzeugbremssystems handeln.

Weiterhin vorteilhaft ist, wenn in dem Gehäuse mindestens ein weiterer Sensor oder ein weiteres Bauteil angeordnet ist. Auf diese Weise kann der Fahrwerksensor diverse Sensorinformationen bereitstellen, erfassen und einer ersten Auswertung mittels der ersten Steuereinheit unterziehen. Weiterhin ergibt sich ein Kostenvorteil durch ein gemeinsam genutztes Gehäuse, eine gemeinsame Spannungsversorgung sowie einen daraus resultierenden reduzierten Verkabelungsaufwand im Vergleich zum Stand der Technik.

Weiterhin bevorzugt ist, dass der mindestens eine weitere Sensor oder das mindestens eine weitere Bauteil eines aus der Liste der Folgenden ist: ein hydraulischer Aktor, eine Ansteuereinheit mit der ein Hydraulikventil ansteuerbar ist, ein Stoßdämpferwegsensor, eine drahtlose oder drahtgebundene Schnittstelle, mit der Sensoren an den Fahrwerksensor anschließbar sind, sowie eine Schnittstelle und/oder ein Steuergerät mit dem eine elektrische Bremseinheit mit dem Fahrwerksensor verbindbar und/oder steuerbar ist. Bei dem hydraulischen Aktor handelt es sich beispielsweise um eine Zugstufe (Ventil) und eine Druckstufe (Ventil). Die Ansteuereinheit ist beispielsweise eine Ansteuerungsspule zur Betätigung von Hydraulikventilen. Der Stoßdämpferwegsensor kann ein magnetischer, akustischer oder optischer Sensor sein. Über die drahtlose oder drahtgebundene Schnittstelle kann ein Raddrehzahlsensor oder ein Reifendrucksensor eines Kraftfahrzeugs mit dem Fahrwerksensor verbunden werden. Die Reglereinheit ist insbesondere ein Dämpfersteuergerät bzw. ein Fahrwerksteuergerät. Die Schnittstelle und/oder das Steuergerät für die elektrische Bremseinheit sind insbesondere für eine elektromechanische Bremseinheit oder für eine elektro-hydraulische Bremseinheit geeignet.

Aufgrund der obigen Bauteile können vorzugsweise diverse Sensorinformationen von dem Fahrwerksensor bereitgestellt, erfasst und einer ersten Auswertung unterzogen werden. Weiterhin kann die erste Steuereinheit des Fahrwerksensors ebenso einen oder mehrere Aktoren ansteuern, insbesondere hydraulische Aktoren beispielsweise für eine Fahrwerkregelfunktion. Ein weiterer Vorteil ist die Integration einer Höhenstandsauswertung, die Integration der Raddrehzahlerfassung und/oder der Raddrehzahlsensorauswertung, die Integration der Reifenluftdruckkontrolle sowie die Integration der Bremsbelagverschleißanzeige und die Integration einer Aktuatoransteuerung für Fahrwerksfunktionen jeweils im Gehäuse des Fahrwerksensors. Dies wirkt sich weiterhin vorteilhaft hinsichtlich einer Wärmeabfuhr von einem zentralen Steuergerät eines Kraftfahrzeugs sowie der elektromagnetischen Verträglichkeit aus. Ein zentrales Steuergerät kann auf diese Weise mit weniger Bauteilen gestaltet werden. Weiterhin können im Vergleich zum Stand der Technik kürzere pulsweitenmodulierte Leitungen verwendet werden, da der Fahrwerksensor mit der ersten Steuereinheit näher an den jeweiligen Sensoren und Aktoren anordbar ist als eine zentrale Steuereinheit.

Eine Fahrwerksensoranordnung eines Kraftfahrzeugs umfasst vorzugsweise: mindestens zwei erfindungsgemäße Fahrwerksensoren, wobei eine Dämpfersteuerung des Kraftfahrzeugs mittels einem Dämpfersteuergerät in einem der mindestens zwei Fahrwerksensoren oder mittels elektronischer Steuereinheiten in den mindestens zwei Fahrwerksensoren oder mittels eines zentralen Dämpfersteuergeräts erfolgt, mit dem die Fahrwerksensoren verbindbar sind.

Die Fahrwerksensoranordnung weist bevorzugt zwei Fahrwerksensoren auf, die in dem Fahrzeug angeordnet sind. Insbesondere sind die mindestens zwei Fahrwerksensoren an diagonal entgegengesetzten Enden des Kraftfahrzeugs angeordnet. Weiterhin erfolgt eine Dämpfersteuerung des Kraftfahrzeugs mittels eines Dämpfersteuergeräts in einem der mindestens zwei Fahrwerksensoren. Die Dämpfersteuerung bzw. das Dämpfersteuergerät kann dann identisch mit der ersten Steuereinheit eines der beiden Fahrwerksensoren sein.

Alternativ vorzugsweise erfolgt die Dämpfersteuerung mittels elektronischer Steuereinheiten in den mindestens zwei Fahrwerksensoren. Bei diesen elektronischen Steuereinheiten handelt es sich insbesondere um die jeweils erste Steuereinheit des jeweiligen Fahrwerksensors. Auf diese Weise findet eine Aufteilung der Dämpfersteuerung auf zwei Steuereinheiten statt, was eine Aufteilung der lokal erforderlichen Prozessorleistung bewirkt.

Gemäß einer weiteren Alternative erfolgt die Dämpfersteuerung zweckmäßigerweise mittels eines zentralen Dämpfersteuergeräts, mit dem die Fahrwerksensoren verbindbar sind. Bei dem zentralen Dämpfersteuergerät kann es sich beispielsweise um ein zentrales Steuergerät des Kraftfahrzeugs handeln. Insbesondere entspricht das zentrale Steuergerät der oben bei der Beschreibung des erfindungsgemäßen Fahrwerksensors genannten zweiten Steuereinheit. Auf diese Weise können die jeweils zwei ersten Steuereinheiten die Signale der jeweiligen Sensoren einer ersten Auswertung unterziehen und diese ausgewerteten Signale mittels der Bus-kompatiblen Schnittstelle der ersten Steuereinheit an die zentrale oder zweite Steuereinheit übermitteln. Auch dies hat eine Reduktion der jeweils erforderlichen Prozessorleistung zur Folge.

Gemäß einer vorteilhaften Ausführungsform weist die Fahrwerksensoranordnung vier Fahrwerksensoren auf. Jeder der vier Fahrwerksensoren ist jeweils im Raum des Radkastens eines Rades des Kraftfahrzeugs befestigt, insbesondere am Dämpfer und/oder an der Aufhängung des Rades. Weiterhin kann der Fahrwerksensor am Feder-Dämpfer-System bzw. an der Aufhängung des Rades befestigt sein. Ein Dämpfersteuergerät kann in einem der vier Fahrwerksensoren integriert sein oder die Dämpferregelung ist auf die ersten Steuereinheiten von mindestens zwei Fahrwerksensoren verteilt. Alternativ weist das Kraftfahrzeug ein zentrales Dämpfersteuergerät auf, mit dem die vier Fahrwerksensoren verbunden sind und das die Fahrwerksensoren gemeinsam ansteuert.

Durch die Anordnung von vier Fahrwerksensoren vorzugsweise an der Radaufhängung des Kraftfahrzeugs, spannen die Fahrwerksensoren eine größtmögliche Fläche auf. Dies hat eine im Vergleich zum Stand der Technik höhere Sensitivität und Genauigkeit der erfassten Messwerte, insbesondere der kombinierten Messwerte der dreiachsigen Beschleunigungssensoren zur Folge.

Weiterhin ergibt sich vorzugsweise für eine Vielzahl von Funktionen eine drei-aus-vier-Redundanz alleine aus der Tatsache, dass für verschiedene Fahrzeugszustandsberechnungen ein Sensordreieck aufgespannt werden muss. Aufgrund der vier Fahrwerksensoren kann ein beliebiger Fahrwerksensor ohne Funktionseinbußen für eine Fahrzeugzustandserkennung ausfallen. Im Hinblick auf die Kosten bedeutet dies, dass eine 100 %ige Redundanz bei lediglich 25 % Mehrkosten realisierbar ist. Wird dies mit einem zentralen Sensor gemäß Stand der Technik verglichen, bedeutet dies, dass im Stand der Technik 100 % Mehrkosten erforderlich sind, wenn ein redundantes System für einen zentralen Sensor wie beispielsweise einen Dreh- oder Rollratensensor erreicht werden soll.

Weiterhin ist bevorzugt, dass jedem Rad des Kraftfahrzeugs ein Fahrwerksensor zugeordnet ist. Dies ist insbesondere bei drei- oder mehrachsigen Fahrzeugen, aber auch bei Kraftfahrzeugen mit drei oder zwei Rädern der Fall und verbessert die Genauigkeit einer Fahrzeugzustandserkennung.

Ein Vorteil der erfindungsgemäßen Fahrwerksensoren ist insbesondere weiterhin, dass sie besonders für die Verwendung verteilter Softwarearchitekturen geeignet sind. Zweckmäßigerweise ist die Fahrwerksensoranordnung zumindest mit einer Steuereinheit des Kraftfahrzeugs verbunden. Beispielsweise ist die Fahrwerksensoranordnung mit der elektronischen Steuereinheit des Kraftfahrzeugbremssystems verbunden und stellt dieser Steuereinheit Sensorsignale und Sensordaten bereit.

Wie bereits oben dargelegt, weist die Fahrwerksensoranordnung insbesondere mindestens drei Fahrwerksensoren auf, wobei aus den Sensorausgangssignalen der dreiachsigen Beschleunigungssensoren und unter Berücksichtigung der jeweiligen Position des Fahrwerksensors eine Drehrate und/oder Beschleunigung des Kraftfahrzeugs um seine Hochachse und/oder um seine Querachse und/oder seine Längsachse berechnet wird. Dies geschieht unter Berücksichtigung insbesondere im Hinblick auf einen definierten Fahrzeugmittelpunkt oder Fahrzeugschwerpunkt und/oder einer zentralen Fahrzeugdrehachse und/oder im Hinblick auf die relative jeweilige Positionierung zwischen Fahrzeugkarosserie und Fahrwerk. Auf diese Weise lassen sich Gierbewegungen, Nick-/Aufbäumbewegungen sowie Rollbewegungen mit einer im Vergleich zum Stand der Technik höheren Genauigkeit erfassen.

Weiterhin kann im Vergleich zu einem üblicherweise verwendeten Drehratensensor bzw. Gierratensensor zweckmäßigerweise eine Plausibilisierung der Sensorinformationen zur Bestimmung der Drehrate des Kraftfahrzeugs durchgeführt werden. Die Fahrwerksensoranordnung ist im Hinblick auf diese Bestimmung redundant aufgebaut und ist beispielsweise bei der Verwendung von vier oder mehr Fahrwerksensoren auch bei Ausfall eines oder mehrerer Fahrwerksensoren betriebsfähig. Die erfassten Daten sind zudem weiterhin plausibilisierbar. Auf diese Weise kann der üblicherweise verwendete Drehratensensor entfallen, was zu einer Kosteneinsparung führt.

Im Hinblick auf die Anforderungen an eine funktionale Sicherheit ermöglicht der erfindungsgemäße Fahrwerksensor einen Systemaufbau, der mehrere Vorteile bietet. Diese wurden weiter oben bereits detailliert dargelegt. Zudem lässt sich mit den erfindungsgemäßen Fahrwerksensoren die Systemkomplexität im Vergleich zum Stand der Technik reduzieren, da ein beispielsweise radweiser Systemverbund, insbesondere von vier Fahrwerksensoren, Sicherheitsfunktionalitäten mehrerer autarker Einzelgeräte bündelt. Auf diese Weise lässt sich eine Schnittstellenanzahl reduzieren. Weiterhin ist die räumliche Trennung zwischen einer Steuereinheit und den verwendeten Sensoren durch die radweise Zuordnung der Fahrwerksensoren im Vergleich zum Stand der Technik reduziert. Ein Ausfallrisiko eines Fahrwerkstabilitätssystems in einem Schadensfall, beispielsweise bei einem Unfall, ist durch die Aufteilung der Fahrwerksensoren zusätzlich im Vergleich zum Stand der Technik verringert.

Ein erfindungsgemäßes Kraftfahrzeug weist einen erfindungsgemäßen Fahrwerksensor oder eine erfindungsgemäße Fahrwerksensoranordnung auf. Das Kraftfahrzeug weist alle Vorteile des Fahrwerksensors oder der Fahrwerksensoranordnung auf. Die jeweiligen Vorteile wurden oben bereits detailliert beschrieben, so dass eine Wiederholung an dieser Stelle nicht erfolgt.

Ein Regelungsverfahren eines Kraftfahrzeugs, das einen erfindungsgemäßen Fahrwerksensor aufweist, umfasst die Merkmale des Anspruchs 9.

Auf diese Weise können verschiedene Sensorinformationen mittels des Fahrwerksensors einer ersten Auswertung unterzogen werden und danach über die gemeinsame Schnittstelle mittels des Busses an die zweite Steuereinheit des Kraftfahrzeugs übermittelt werden. Dies reduziert, wie oben dargelegt, die erforderliche Prozessorleistung einer zweiten Steuereinheit des Kraftfahrzeugs, insbesondere der zentralen Steuereinheit des Kraftfahrzeugs.

Vorteilhaft ist zudem der Schritt des Ansteuerns einer Reglereinheit des Fahrwerksensors mittels der ersten Steuereinheit des Fahrwerksensors aufgrund eines von dem Fahrwerksensor erfassten Messwerts oder eines von der zentralen Steuereinheit übermittelten Signals. Auf diese Weise kann eine Ansteuerung von Aktoren direkt durch die erste Steuereinheit in dem Fahrwerksensor erfolgen. Dies verkürzt die erforderlichen Signalleitungswege und entlastet einen Prozessor der zweiten oder zentralen Steuereinheit des Kraftfahrzeugs zusätzlich.

Zunächst werden vorzugsweise Messwerte mit einem dreiachsigen Beschleunigungssensor erfasst. Wie bereits bei dem erfindungsgemäßen Fahrwerksensor ausgeführt, befindet sich der dreiachsige Beschleunigungssensor in dem Gehäuse des Fahrwerksensors. Ein erstes Auswerten der mit dem dreiachsigen Beschleunigungssensor erfassten Messwerte erfolgt mittels einer ersten Steuereinheit. Die erste Steuereinheit ist ebenfalls in dem Gehäuse des Fahrwerksensors angeordnet. Die erstausgewerteten erfassten Messwerte werden von der ersten Steuereinheit an eine zweite oder zentrale Steuereinheit des Kraftfahrzeugs übermittelt. Dies geschieht insbesondere über eine gemeinsame Schnittstelle in der ersten Steuereinheit, die eine Bus-kompatible Schnittstelle ist. Dementsprechend geschieht das Übermitteln mittels eines Busses, beispielsweise eines CAN-Busses oder eines Flex-Ray-Busses.

In einer bevorzugten Ausführungsform des Regelungsverfahrens weist es die weiteren Schritte auf: zweites Auswerten der erstausgewerteten erfassten Messwerte in der zweiten Steuereinheit und Berücksichtigen der zweiten Auswertung der Messwerte in einem Sicherheitssystem des Kraftfahrzeugs, insbesondere in einer Fahrdynamikregelung. Bei der zweiten Steuereinheit handelt es sich insbesondere um eine zentrale Steuereinheit des Kraftfahrzeugs.

Im Folgenden wird die vorliegende Erfindung unter Bezugnahme auf die Zeichnungen anhand einer detaillierten Ausführungsform beschrieben. Gleiche Bezugszeichen in den Zeichnungen bezeichnen jeweils gleiche Merkmale.

Weitere bevorzugte Ausführungsformen ergeben sich aus den Unteransprüchen und der nachfolgenden Beschreibung von Ausführungsbeispielen an Hand von Figuren.

Es zeigen in schematischer Darstellung:
- Fig. 1: eine schematische Darstellung einer beispielhaften Anordnung von vier erfindungsgemäßen Fahrwerksensoren in einem Kraftfahrzeug,
- Fig. 2: eine schematische Darstellung einer beispielhaften Anordnung eines erfindungsgemäßen Fahrwerksensors an einer Radaufhängung,
- Fig. 3: eine schematische Darstellung einer beispielhaften Ausbildung eines Fahrwerksensors bezogen auf dessen integrierte Komponenten,
- Fig. 4: eine schematische Darstellung einer Einbindung von Fahrwerksensoren in ein Bussystem eines Kraftfahrzeugs,
- Fig. 5: eine schematische Darstellung der durch die Beschleunigungssensorelemente der Fahrwerksensoren erfassten Beschleunigungen und
- Fig. 6: eine schematische Darstellung eines erfindungsgemäßen Verfahrensablaufs eines Regelungsverfahrens.

Im Folgenden sind die erfindungsgemäßen Fahrwerksensoren anhand eines vierrädrigen Kraftfahrzeugs beschrieben. Die Fahrwerksensoren können allerdings auch in Kraftfahrzeugen mit mehr oder weniger Rädern verwendet werden. Insbesondere werden in einer Fahrwerksensoranordnung in einem Kraftfahrzeug mindestens zwei Fahrwerksensoren verwendet.

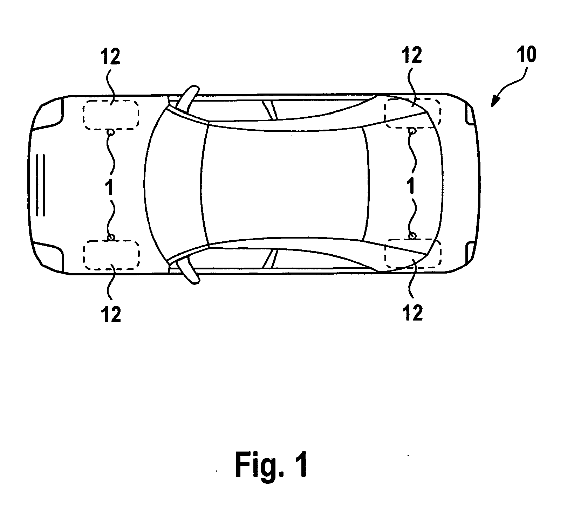

Fig. 1 zeigt ein Kraftfahrzeug 10 mit vier Rädern 12. Jedem der vier Räder 12 ist ein Fahrwerksensor 1 zugeordnet. Auf diese Weise wird ein Sensorrechteck über eine Fläche des Kraftfahrzeugs 10 aufgespannt. Dieses Sensorrechteck deckt einen Großteil einer Kraftfahrzeugfläche ab.

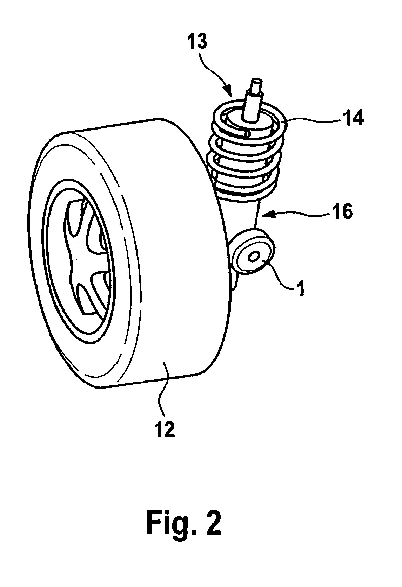

Gemäß Fig. 2 ist jedem Rad 12 ein Dämpfer 13 mit einer Feder 14 und einem Federbein 16 zugeordnet. Der Fahrwerksensor 1 ist an einer Aufhängung 18 des Rades 12 an dem Dämpfer 13 befestigt.

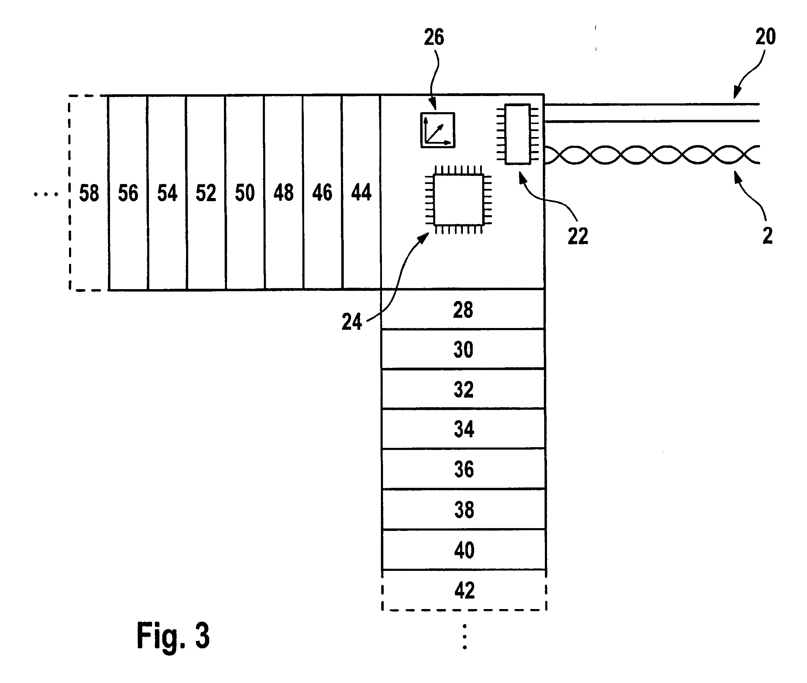

Bezug nehmend auf Fig. 3 weist der erfindungsgemäße Fahrwerksensor 1 eine Energieversorgungseinheit 22, eine erste Steuereinheit 24 sowie einen dreiachsigen Beschleunigungssensor 26 in einem Gehäuse auf. Die Energieversorgungseinheit 22 kann weiterhin einen Bus-Treiber aufweisen. Der Fahrwerksensor 1 ist außerdem mit einem Bus 2 und einer Energieversorgung 20 des Kraftfahrzeugs 10 verbunden.

Über die obigen Komponenten hinaus kann der Fahrwerksensor 1 weiterhin aufweisen: einen Raddrehzahlsensor 28, einen Bremsbelagverschleißsensor 30, einen Reifenluftdrucksensor 32, einen Höhenstandssensor 34, einen Bremsentemperatursensor 36, einen Achs- und Lenkgeometriesensor 38 sowie einen Reifentemperatursensor 40 und weitere Sensoren 42. Der Fahrwerksensor 1 übernimmt für einen jeweiligen der oben genannten Sensoren zudem eine erste Auswertung der erfassten Signale.

Weiterhin kann der Fahrwerksensor 1 verschiedene Aktuatoren aufweisen oder mit diesen verbunden sein. Bei den verschiedenen Aktuatoren handelt es sich insbesondere um Aktuatoren für Folgendes: Dämpfkraftverstellung 44, Federkraftverstellung 46, Höhenverstellung 48, Reifendruckregelung 50, Bremsenansteuerung 52, Lenkungsansteuerung 54, Achsgeometrieverstellung 56 sowie weitere zweckmäßige Aktuatoren 58. Eine Steuerung der jeweiligen mit dem Fahrwerksensor 1 verbundenen Aktuatoren kann über die erste Steuereinheit 24 erfolgen.

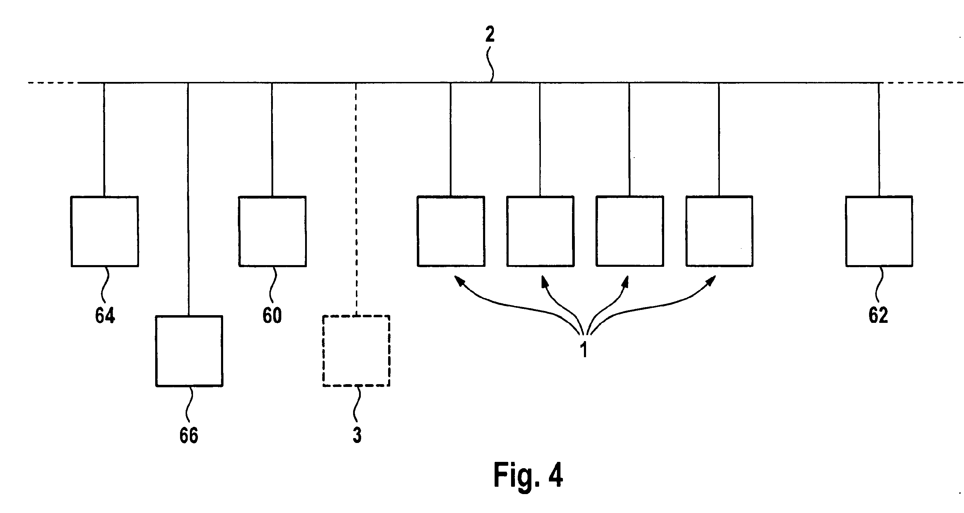

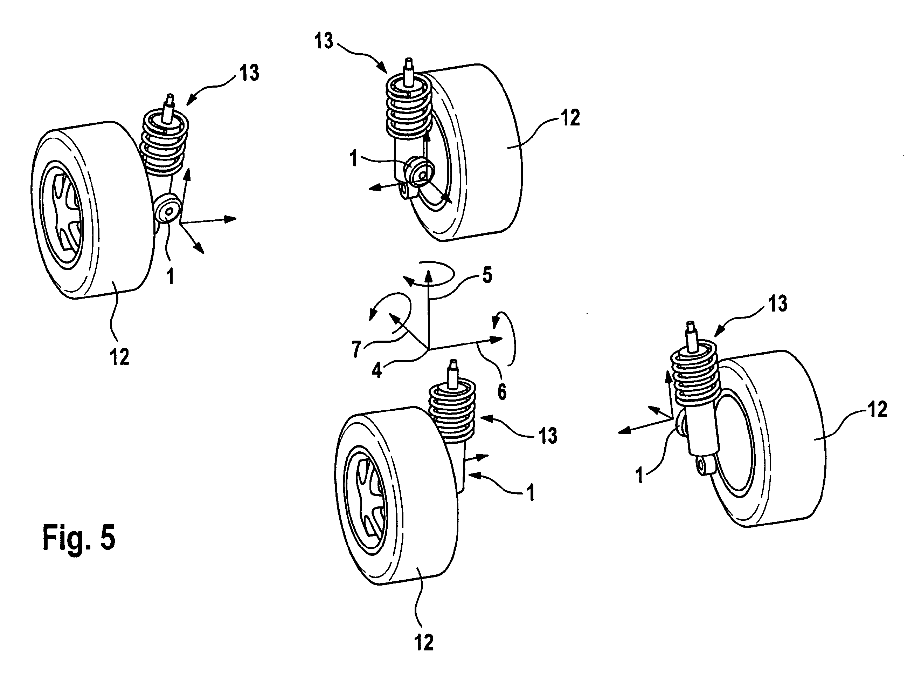

Nun Bezug nehmend auf Fig. 4 ist eine beispielhafte Einbettung einer Fahrwerksensoranordnung in ein Kraftfahrzeuginformationssystem dargestellt. Im dargestellten Fall sind vier Fahrwerksensoren 1 vorhanden. Die Fahrwerksensoren 1 sind mit einem Bus 2 über eine Schnittstelle der ersten Steuereinheit 24 verbunden. Mit dem Bus 2 sind auch diverse schematisch dargestellte elektronische Steuergeräte wie beispielsweise ein Steuergerät zur ABS- und Fahrdynamikregelung (ESP)64, ein Steuergerät für die Lenkung 66, ein zentrales oder zweites Steuergerät 60 sowie weitere Steuergeräte 62 verbunden. Optional ist weiterhin ein Drehratensensor 3 mit dem Bus verbunden. Allerdings kann der Drehratensensor 3 insbesondere bei Verwendung von vier Fahrwerksensoren 1 entfallen. Die Drehrate des Kraftfahrzeugs wird in diesem Fall aus den Beschleunigungssensorsignalen der vier Fahrwerksensoren 1 berechnet. Dies ist beispielhaft in Fig. 5 dargestellt.

Bezug nehmend auf Fig. 5 sind die vier Fahrwerksensoren 1 jedem Rad 12 des Kraftfahrzeugs 10 zugeordnet. Jeder Fahrwerksensoren 1 umfasst jeweils einen dreiachsigen Beschleunigungssensor. Somit erfasst jeder Fahrwerksensor eine Beschleunigungskomponente in Längsrichtung, Querrichtung und vertikaler Richtung des Kraftfahrzeugs. Weiterhin ist die jeweilige Position des Fahrwerksensors 1 im Hinblick auf den bezüglich einer Drehrate des Kraftfahrzeugs zentralen Punkt 4 bekannt. Aus der durch den jeweiligen Beschleunigungssensor aufgenommenen Beschleunigung des jeweiligen Fahrwerksensors 1 kann unter Berücksichtigung des Hebelarms bzw. des Abstands zum zentralen Punkt 4 die resultierende Drehrate um die Hochachse 5, die resultierende Nickrate um die Querachse 6 sowie die resultierende Rollrate um die Längsachse 7 des Kraftfahrzeugs 10 errechnet werden.

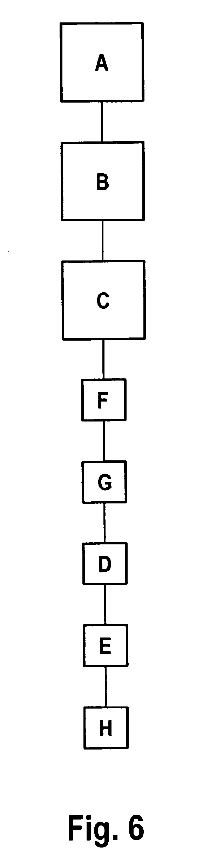

In Fig. 6 ist ein beispielhafter Verfahrensablauf des erfindungsgemäßen Regelungsverfahrens dargestellt. In einem Schritt A werden Messwerte mittels eines dreiachsigen Beschleunigungssensors in dem Fahrwerksensor erfasst. Ein erstes Auswerten der erfassten Messwerte mittels einer ersten Steuereinheit in dem Fahrwerksensor erfolgt im Schritt B. In Schritt C werden die erstausgewerteten erfassten Messwerte an eine zweite Steuereinheit des Kraftfahrzeugs mittels eines Busses übermittelt.

Zeitgleich oder danach erfolgt in einem Schritt F ein Erfassen weiterer Messwerte mit der ersten Steuereinheit des Fahrwerksensors. Bei den weiteren Messwerten handelt es sich insbesondere um Messwerte der Sensoren: Höhenstandsensor, Stoßdämpferwegsensor, Raddrehzahlsensor sowie Reifendrucksensor. Nachdem Messwerte von einem jeweiligen der obigen Sensoren erfasst wurden, werden diese in Schritt G ebenfalls mit der ersten Steuereinheit des Fahrwerksensors einem erstem Auswerten unterzogen und an die zweite Steuereinheit des Kraftfahrzeugs übermittelt.

Anschließend erfolgt ein zweites Auswerten der erstausgewerteten erfassten Messwerte in der zweiten Steuereinheit in Schritt D. Die zweite Steuereinheit steuert beispielsweise ein Dämpfersystem und/oder eine Fahrdynamikregelung des Kraftfahrzeugs. Die zweite Auswertung der Messwerte wird daher in Schritt E in einem Sicherheitssystem des Kraftfahrzeugs, insbesondere in einer Fahrdynamikregelung des Kraftfahrzeugs berücksichtigt. Beispielsweise lässt sich ein Momentpol des Kraftfahrzeugs durch mindestens zwei dreiachsige Beschleunigungssensoren in mindestens zwei Fahrwerksensoren bestimmen. Dies liefert eine weitere Information über den Fahrzeugzustand insbesondere für die Fahrdynamikregelung des Kraftfahrzeugs.

In einem Schritt H erfolgt ein Ansteuern einer Reglereinheit des Fahrwerksensors mittels der ersten Steuereinheit des Fahrwerksensors aufgrund eines von dem Fahrwerksensor erfassten Messwerts oder eines von der zweiten Steuereinheit übermittelten Signals. Auf diese Weise kann beispielsweise eine Dämpfereinstellung des Kraftfahrzeugs beeinflusst werden.

## Patentansprüche

1. Fahrwerksensor (1) eines Kraftfahrzeugs (10), umfassend:
a) ein Gehäuse, in dem
a1) eine Energieversorgungseinheit (22),
a2) eine erste Steuereinheit (24) mit einer Bus-kompatiblen Schnittstelle, mit der der Fahrwerksensor (1) mit einer zweiten Steuereinheit (60) verbindbar ist, sowie
a3) ein dreiachsiger Beschleunigungssensor (26) angeordnet sind, wobei
b) das Gehäuse eine Vorrichtung aufweist, mit der der Fahrwerkssensor (1) an einer Komponente einer Radaufhängung des Kraftfahrzeugs (10) befestigbar ist, **dadurch gekennzeichnet, dass**
c) der Fahrwerksensor (1) eine Reglereinheit umfasst und so ausgebildet ist, dass diese Reglereinheit des Fahrwerksensors (1) mittels der ersten Steuereinheit (24) des Fahrwerksensors (1) aufgrund eines von dem Fahrwerksensor (1) erfassten Messwerts angesteuert wird oder mittels eines von der zweiten Steuereinheit (60) übermittelten Signals angesteuert wird.

2. Fahrwerksensor (1) gemäß Anspruch 1, dessen Gehäuse in einem Radkasten des Kraftfahrzeugs (10) befestigbar ist.

3. Fahrwerksensor (1) gemäß einem der vorhergehenden Ansprüche, während in dem Gehäuse mindestens ein weiterer Sensor oder ein weiteres Bauteil angeordnet ist.

4. Fahrwerkssensor (1) gemäß Anspruch 3, dessen mindestens ein weiterer Sensor oder dessen mindestens ein weiteres Bauteil eines aus der Liste der Folgenden ist:
a) ein hydraulischer Aktor,
b) eine Ansteuereinheit mit der ein Hydraulikventil ansteuerbar ist,
c) ein Stoßdämpferwegsensor,
d) eine drahtlose oder drahtgebundene Schnittstelle, mit der Sensoren an den Fahrwerksensor anschließbar sind,
sowie
e) eine Schnittstelle und/oder ein Steuergerät mit dem eine elektrische Bremseinheit mit dem Fahrwerksensor verbindbar und/oder steuerbar ist.

5. Fahrwerksensoranordnung eines Kraftfahrzeugs (10), umfassend:
a) mindestens zwei Fahrwerksensoren (1) gemäß einem der Ansprüche 1 bis 4, wobei
b) eine Dämpfersteuerung des Kraftfahrzeugs (10)
1) mittels einem Dämpfersteuergerät in einem der mindestens zwei Fahrwerksensoren (1) oder
2) mittels elektronischer Steuereinheiten in den mindestens zwei Fahrwerksensoren (1) oder
3) mittels eines zentralen Dämpfersteuergeräts erfolgt, mit dem die Fahrwerksensoren (1) verbindbar sind.

6. Fahrwerksensoranordnung gemäß Anspruch 5, die vier Fahrwerksensoren (1) aufweist.

7. Fahrwerksensoranordnung gemäß Anspruch 6, wobei jedem Rad (12) des Kraftfahrzeugs (10) ein Fahrwerksensor (1) zugeordnet ist.

8. Kraftfahrzeug (10) mit einem Fahrwerksensor (1) gemäß einem der Ansprüche 1 bis 4 oder einer Fahrwerksensoranordnung gemäß einem der Ansprüche 5 bis 7.

9. Regelungsverfahren eines Kraftfahrzeugs (10), das einen Fahrwerksensor (1) aufweist, umfassend
ein Gehäuse, in dem eine Energieversorgungseinheit (22), eine erste Steuereinheit (24) mit einer Bus-kompatiblen Schnittstelle, mit der der Fahrwerksensor (1) mit einer zweiten Steuereinheit (60) verbindbar ist, sowie ein dreiachsiger Beschleunigungssensor (26) angeordnet sind, wobei das Gehäuse eine Vorrichtung aufweist, mit der der Fahrwerkssensor (1) an einer Komponente einer Radaufhängung des Kraftfahrzeugs (10) befestigbar ist,
wobei das Regelungsverfahren die Schritte umfasst:
a) Erfassen (A) von Messwerten mittels eines dreiachsigen Beschleunigungssensors (26) in dem Fahrwerksensor (1),
b) erstes Auswerten (B) der erfassten Messwerte mittels einer ersten Steuereinheit (24) in dem Fahrwerksensor (1),
c) Übermitteln (C) der erstausgewerteten erfassten Messwerte an eine zweite Steuereinheit (60) des Kraftfahrzeugs (10) mittels eines Busses (2),
f) Erfassen (F) weiterer Messwerte mit der ersten Steuereinheit (24) des Fahrwerksensors (1) von mindestens einem der weiteren Sensoren: Höhenstandssensor (34), Stoßdämpferwegsensor, Raddrehzahlsensor (28) und Reifendrucksensor (32), sowie
g) erstes Auswerten (G) der weiteren erfassten Messwerte mit der ersten Steuereinheit (24) des Fahrwerksensors und Übermitteln an die zweite Steuereinheit (60)des Kraftfahrzeugs (10), und
h) Ansteuern (H) einer Reglereinheit des Fahrwerksensors (1) mittels der ersten Steuereinheit (24) des Fahrwerksensors (1) aufgrund eines von dem Fahrwerksensor (1) erfassten Messwerts oder eines von der zweiten Steuereinheit (60) übermittelten Signals.

10. Regelungsverfahren gemäß Anspruch 9, das die weiteren Schritte aufweist:
d) zweites Auswerten (D) der erstausgewerteten erfassten Messwerte in der zweiten Steuereinheit (60)und
e) Berücksichtigen (E) der zweiten Auswertung der Messwerte in einem Sicherheitssystem des Kraftfahrzeugs (10), insbesondere in einer Fahrdynamikregelung.

## Claims

1. Chassis sensor (1) of a motor vehicle (10) comprising:
a) a housing in which
a1) a power supply unit (22),
a2) a first control unit (24) having a bus-compatible interface with which the chassis sensor (1) can be connected to a second control unit (60), and
a3) a three-axis acceleration sensor (26) are arranged, wherein
b) the housing has a device with which the chassis sensor (1) can be mounted on a component of a wheel suspension system of the motor vehicle (10), **characterized in that**
c) the chassis sensor (1) comprises a regulator unit and is designed in such a way that this regulator unit of the chassis sensor (1) is actuated by means of the first control unit (24) of the chassis sensor (1) on the basis of a measured value which is sensed by the chassis sensor (1) or by means of a signal which is transmitted by the second control unit (60).

2. Chassis sensor (1) according to Claim 1, the housing of which can be mounted in a wheel case of the motor vehicle (10).

3. Chassis sensor (1) according to one of the preceding claims, wherein at least one further sensor or one further component is arranged in the housing.

4. Chassis sensor (1) according to Claim 3, the at least one further sensor or at least one further component of which is one from the following list:
a) a hydraulic actuator,
b) an actuation unit with which a hydraulic valve can be actuated,
c) a shock absorber travel sensor,
d) a wireless or wire-bound interface with which sensors can be connected to the chassis sensor,
and
e) an interface and/or a controller with which an electrical brake unit can be connected to the chassis sensor and/or controlled.

5. Chassis sensor arrangement of a motor vehicle (10), comprising:
a) at least two chassis sensors (1) according to one of Claims 1 to 4, wherein
b) damper control of the motor vehicle (10) is carried out
1) by means of a damper controller in one of the at least two chassis sensors (1) or
2) by means of electronic control units in the at least two chassis sensors (1) or
3) by means of a central damper controller to which the chassis sensors (1) can be connected.

6. Chassis sensor arrangement according to Claim 5, which has four chassis sensors (1).

7. Chassis sensor arrangement according to Claim 6, wherein each wheel (12) of the motor vehicle (10) is assigned a chassis sensor (1).

8. Motor vehicle (10) having a chassis sensor (1) according to one of Claims 1 to 4 or a chassis sensor arrangement according to one of Claims 5 to 7.

9. Method for controlling a motor vehicle (10) which has a chassis sensor (1) comprising,
a housing in which a power supply unit (22), a first control unit (24) having a bus-compatible interface with which the chassis sensor (1) can be connected to a second control unit (60), and a three-axis acceleration sensor (26) are arranged, wherein the housing has a device with which the chassis sensor (1) can be mounted on a component of a wheel suspension system of the motor vehicle (10), wherein the control method comprises the steps:
a) acquisition (A) of measured values by means of a three-axis acceleration sensor (26) in the chassis sensor (1),
b) first evaluation (B) of the acquired measured values by means of a first control unit (24) in the chassis sensor (1),
c) transfer (C) of the first-evaluated and acquired measured values to a second control unit (60) of the motor vehicle (10) by means of a bus (2),
f) acquisition (F) of further measured values with the first control unit (24) of the chassis sensor (1) by at least one of the further sensors: height sensor (34), shock absorber travel sensor, wheel speed sensor (28) and tire pressure sensor (32), as well as
g) first evaluation (G) of the further acquired measured values with the first control unit (24) of the chassis sensor and transfer to the second control unit (60) of the motor vehicle (10), and
h) actuation (H) of a closed-loop controller unit of the chassis sensor (1) by means of the first control unit (24) of the chassis sensor (1) on the basis of a measured value acquired by the chassis sensor (1) or a signal transferred by the second control unit (60).

10. Control method according to Claim 9, which has the further steps:
d) second evaluation (D) of the first-evaluated and acquired measured values in the second control unit (60), and
e) taking into account (E) of the second evaluation of the measured values in a safety system of the motor vehicle (10), in particular in a vehicle movement dynamics control system.

## Revendications

1. Capteur de train (1) d'un véhicule automobile (10), comprenant :
a) un logement, dans lequel
a1) une unité d'alimentation électrique (22),
a2) une première unité de commande (24) avec une interface compatible bus, avec laquelle le capteur de train (1) peut être relié à une deuxième unité de commande (60), ainsi que
a3) un capteur d'accélération triaxial (26) sont disposés, dans lequel
b) le logement présente un dispositif, avec lequel le capteur de train (1) peut être fixé sur un composant d'une suspension de roue du véhicule automobile (10), **caractérisé en ce que**
c) le capteur de train (1) comprend une unité de régulateur et est conçu de telle sorte que cette unité de régulateur du capteur de train (1) soit pilotée au moyen de la première unité de commande (24) du capteur de train (1) sur la base d'une valeur de mesure détectée par le capteur de train (1) ou soit pilotée au moyen d'un signal transmis par la deuxième unité de commande (60).

2. Capteur de train (1) selon la revendication 1, dont le logement peut être fixé dans un caisson de roue du véhicule automobile (10).

3. Capteur de train (1) selon une des revendications précédentes, dans lequel au moins un capteur supplémentaire ou un composant supplémentaire est disposé dans le logement.

4. Capteur de train (1) selon la revendication 3, dont au moins un capteur supplémentaire ou au moins un composant supplémentaire de ce dernier est un de la liste de ce qui suit :
a) un actionneur hydraulique,
b) une unité de pilotage avec laquelle une soupape hydraulique peut être pilotée,
c) un capteur de course d'amortisseur de chocs,
d) une interface sans fil ou filaire, avec laquelle des capteurs peuvent être raccordés au capteur de train, ainsi que
e) une interface et/ou un appareil de commande avec lequel une unité de freinage électrique peut être reliée avec le capteur de train et/ou commandée.

5. Dispositif de capteur de train d'un véhicule automobile (10), comprenant :
a) au moins deux capteurs de train (1) selon une des revendications 1 à 4, dans lequel :
b) une commande d'amortisseur du véhicule automobile (10)
b1) a lieu au moyen d'un appareil de commande d'amortisseur dans un des au moins deux capteurs de train (1) ou
b2) a lieu au moyen d'unités de commande électroniques dans les au moins deux capteurs de train (1) ou
b3) a lieu au moyen d'un appareil de commande d'amortisseur central, avec lequel les capteurs de train (1) peuvent être reliés.

6. Dispositif de capteur de train selon la revendication 5, qui présente quatre capteurs de train (1).

7. Dispositif de capteur de train selon la revendication 6, dans lequel chaque roue (12) du véhicule automobile (10) est coordonnée à un capteur de train (1).

8. Véhicule automobile (10) comportant un capteur de train (1) selon une des revendications 1 à 4 ou un dispositif de capteur de train selon une des revendications 5 à 7.

9. Procédé de régulation d'un véhicule automobile (10), qui présente un capteur de train (1), comprenant :
un logement, dans lequel une unité d'alimentation électrique (22), une première unité de commande (24) avec une interface compatible bus, avec laquelle le capteur de train (1) peut être relié avec une deuxième unité de commande (60), ainsi qu'un capteur d'accélération triaxial (26) sont disposés, dans lequel
le logement présente un dispositif, avec lequel le capteur de train (1) peut être fixé sur un composant d'une suspension de roue du véhicule automobile (10),
dans lequel le procédé de régulation comprend les étapes consistant à :
a) détecter (A) des valeurs de mesure au moyen d'un capteur d'accélération triaxial (26) dans le capteur de train (1),
b) effectuer une première évaluation (B) des valeurs de mesure détectées au moyen d'une première unité de commande (24) dans le capteur de train (1),
c) transmettre (C) les valeurs de mesure détectées évaluées en premier lieu à une deuxième unité de commande (60) du véhicule automobile (10) au moyen d'un bus (2),
f) détecter (F) des valeurs de mesure supplémentaires avec la première unité de commande (24) du capteur de train (1) d'au moins un des capteurs supplémentaires : capteur de hauteur de châssis (34), capteur de course d'amortisseur de chocs, capteur de vitesse de rotation de roue (28) et capteur de pression de pneu (32), ainsi que
g) effectuer une première évaluation (G) des valeurs de mesure détectées supplémentaires avec la première unité de commande (24) du capteur de train et transmettre à la deuxième unité de commande (60) du véhicule automobile (10), et
h) piloter (H) une unité de régulation du capteur de train (1) au moyen de la première unité de commande (24) du capteur de train (1) sur la base d'une valeur de mesure détectée par le capteur de train (1) ou d'un signal transmis par la deuxième unité de commande (60).

10. Procédé de régulation selon la revendication 9, qui présente les étapes supplémentaires consistant à :
d) effectuer une deuxième évaluation (D) des valeurs de mesure détectées évaluées en premier lieu dans la deuxième unité de commande (60) et
e) prendre en compte (E) la deuxième évaluation des valeurs de mesure dans un système de sécurité du véhicule automobile (10), notamment dans une régulation de dynamique de conduite.
